# EUROPEAN PATENT APPLICATION

(11) **EP 1 033 824 A2**
(43) Date of publication of application: **06.09.2000**
(21) Application number: 00103462.8
(22) Date of filing: 29.02.2000
(51) Int. Cl.: H04B 7/005, H04B 1/707

(54) **A code division multiple access receiver with power control**

(30) Priority: 02.03.1999 JP 5358699
(71) Applicant: NEC CORPORATION, Tokyo (JP)
(72) Inventor: Shoji, Takashi, Minato-ku, Tokyo (JP)
(74) Representative: Baronetzky, Klaus, Dipl.-Ing.

(57) **Abstract**

A CDMA receiver which is capable of decreasing the control delay of the closed-loop power control is provided to be used for a code division multiple access system. The CDMA receiver comprises a maximum correlation detector and a de-spreading part for obtaining original information signals from received signals which have been spread by a code for transmission. The maximum correlation detector detects a maximum correlation value among mutual correlations between a received replica signal and a received signal, calculates a time lag between the received replica signal and the received signal having the the maximum correlation value. The de-spreading part performs de-spreading the received signal by using the reception timing obtained by the maximum correlation detector and outputting the de-spread . In addition to these elements, the CDMA receiver is provided with a reception quality measurement part, which measures a received signal to interference ratio (SIR) as a reception quality of the received signal from the received signal and the maximum correlation value obtained by the maximum correlation detector at the same timing as the de-spreading part is performing its operation.

## Description

### BACKGROUND OF THE INVENTION

### 1. Field of the Invention

The present invention relates to a Code Division Multiple Access receiver (a CDMA receiver) used in a Code Division Multiple Access system (CDMA system), and more particularly, relates to a CDMA receiver capable of decreasing the control delay of the closed-loop power control.

### 2. Description of the Related Art

A CDMA receiver is used for a Code Division Multiple Access system (CDMA system) which modulates an information signal with a spread signal (or a spread code) having a speed of tens to hundreds times higher than the speed of the information signal and transmits the modulated information signal at a transmission end, and demodulates the received information signal with the same spread signal (or the same spread code) at a reception end. In the CDMA system, "modulation" is equivalent to "spreading (by a code)" and "demodulation" is equivalent to "de-spreading (by a code)".

A CDMA receiver uses a value obtained by measuring the signal power ratio between the demodulated information signal and an interference signals as a criterion for deciding the reception quality of an information signal. The signal power ratio between the demodulated information signal and an interference signals is referred to as "received SIR (Signal to Interference Ratio)".

A CDMA receiver uses the received SIR as the criterion of an antenna-diversity combine ratio. The received SIR is also used as the criterion of the reception quality used for the closed-loop transmission power control which is provided for solving the far-to-near problem that is an intrinsic problem to a CDMA system.

Therefore, the accuracy of a measurement result is required for the received SIR. Especially, the closed-loop transmission power control goes through steps of measuring reception quality, generation of a control bit, superimposing the control bit on transmission data, transmitting the data to the other party, and changing transmission power in accordance with the control bit at the other party. Therefore, in the step of the reception quality measurement, the real-time characteristic (high-speed calculation of measurement results) is required.

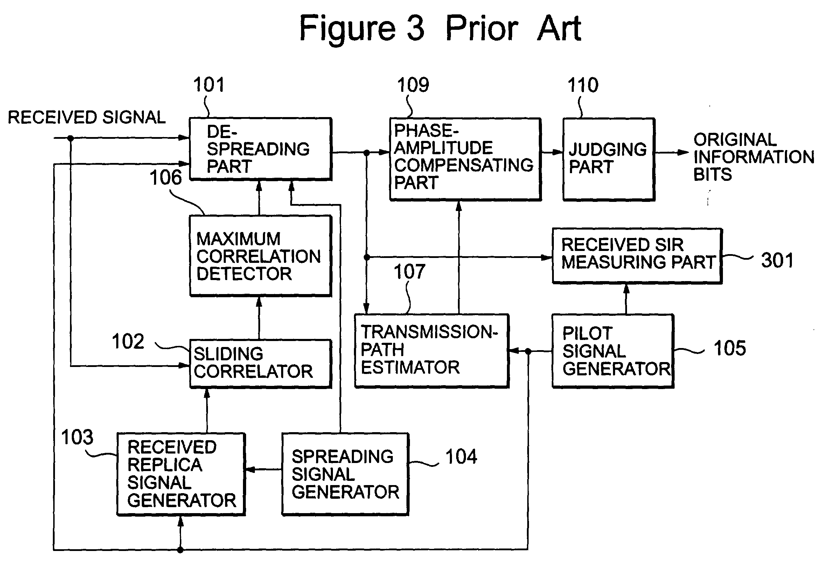

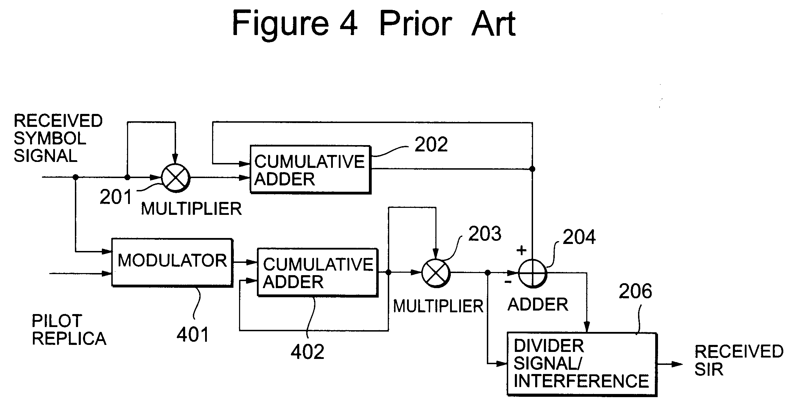

Figure 3 shows an example of a conventional CDMA receiver and Figure 4 shows details of the received SIR measuring part 301 in Figure 3.

The CDMA receiver shown in Figure 3 is provided with a de-spreading part (or a signal demodulation part) 101, a sliding correlator 102, a received replica signal generator 103, a spreading signal generator (or a demodulation signal generator) 104, a pilot signal generator 105, a maximum correlation detector 106, a transmission path estimator 107, a received SIR measuring part 301, a phase-amplitude compensating part 109, and a judging part 110.

Moreover, the received SIR measuring part 301 shown in Figure 4 is provided with a multiplier 201, a cumulative adder 202, a modulator 401, a cumulative adder 402, a multiplier 203, an adder 205, and a divider 206.

In the above configuration, demodulation of a received signal (or de-spreading) is performed by the de-spreading part 101 in accordance with the reception timing from the maximum correlation detector 106 and thus a received symbol signal is output from the de-spreading part 101.

In this case, a spreading code to be used for de-spreading is supplied to the de-spreading part 101 from the spreading signal generator 104. A replica signal output from the received replica signal generator 103 is supplied to the sliding correlator 102. The maximum value of the mutual correlation between the replica signal and a received signal output from the sliding correlator 102 is supplied to the maximum correlation detector 106.

The phase-amplitude compensating part 109 applies transmission-path-distortion compensation to the received symbol signal output from the de-spreading part 101. In this case, a value obtained by multiplying a signal in the pilot symbol section of a received signal output from the transmission path estimator 107 and a pilot symbol replica by a conjugate complex symbol is supplied to the phase-amplitude compensating part 109.

The judging part 110 applies symbol quadrant decision to the received symbol signal to which transmission-path-distortion compensation has been applied by the phase-amplitude compensating part 109 ,and restores the signal to original information bits.

Moreover, in the modulator 401 (in Figure 4) of the received SIR measuring part 301 (in Figure 3), the pilot symbol section of the received symbol signal output from the de-spreading part 101 is multiplied by the conjugate complex symbol of a pilot symbol replica output by the pilot signal generator 105.

Signals multiplied by the conjugate complex symbol are cumulatively added by the cumulative adder 402 (in Figure 4), signal components are in-phase-added, and thereafter, the signals are converted to power-dimensional signals by the multiplier 203 (hereinafter, this signal power component is referred to as RSSI: Received Signal Strength Indication).

On the other hand, the received symbol signal output from the de-spreading part 101 is converted to a power-dimensional signal by the multiplier 201 (in Figure 4) of the received SIR measuring part 301 (in Figure 3) and then, integrated by the number of pilot symbols by the cumulative adder 202. The integrated received symbol signal serves as the whole power component in which signal power component and interference power component are combined. The signal power component RSSI, which is the output signal of the multiplier 203, is subtracted from the whole power component by the adder 204, and remaining signals are treated as the power of the interference power component (hereinafter, the interference power component is referred to as ISSI: Interference Signal Strength Indication). Then, the ratio between the signal power component RSSI and the interference power component ISSI is calculated by the divider 206 and output as a received SIR.

As the foregoing explanation, in a conventional CDMA receiver, a received signal is de-spread (or demodulated) in accordance with the reception timing output from the maximum correlation detector 106 and converted to a received symbol signal. Thereafter, the received symbol signal is demodulated by the received SIR measuring part 301 in accordance with a pilot symbol replica supplied from the pilot signal generator 105 and then reception quality is measured. Therefore, because the time, until the quality of a received signal is measured after the received signal has been input to a CDMA receiver, is relatively long, there is a problem in that a control delay occurs in the closed-loop power control.

### SUMMARY OF THE INVENTION

The present invention is made to solve the above problem and its object is to provide a CDMA receiver capable of decreasing the control delay of the closed-loop power control.

The CDMA receiver according to the present invention is provided with a maximum correlation detector, which detects a maximum correlation value among mutual correlations between a received replica signal and a received signal, calculates a time lag between the received replica signal and the received signal having the the maximum correlation value, and the CDMA receiver comprises a de-spreading part, which performs de-spreading the received signal by using the reception timing calculated by the maximum correlation detector; and a reception quality measurement part, which measures a reception quality of the received signal from a received signal, which is input at the same time as the received signal input to the de-spreading part, and the maximum correlation value obtained by the maximum correlation detector.

According to the present invention, the reception quality measurement part measures a received signal to interference signal ratio (SIR) as the reception quality of the received signal, and the reception quality measurement part comprises a first calculation part, which calculates a total power-dimensional signal of the received signal, a second calculation part, which calculates a signal power component of a received signal strength intensity (RSSI) by using the maximum correlation value obtained by the maximum correlation detector; and a third calculation part, which calculates a power component of an interference signal strength intensity (ISSI) by subtracting the total power-dimensional signal of the received signal by the signal power component of a received signal strength intensity (RSSI), and calculates the received signal to interference signal ratio (SIR) by dividing the RSSI by the ISSI.

In more detail, the reception quality measurement part comprises a first multiplier, which converts a received signal under a spreading state to a power-dimensional signal of the whole signal as the whole power component, a second multiplier, which converts the maximum correlation value detected by the maximum correlation detector to a power-dimensional signal of an information signal as a signal power component, a cumulative adder, which performs an integral calculation for the whole power component by cumulative addition up to the number of pilot symbols, an adder, which calculates an interference power component by adding the whole power component and the signal power component, a first divider, which divides the interference power component by a predetermined spreading rate for converting the interference power having a spreading spectrum bandwidth to an interference power component having a signal bandwidth, and a second divider, which calculates the signal to interference ratio between the signal power component and the interference power component obtained by the first divider.

### BRIEF DESCRIPTION OF THE DRAWINGS

Figure 1 is a block diagram showing an embodiment of a CDMA receiver of the present invention.
Figure 2 is a block diagram showing details of the received SIR measuring part in Figure 1.
Figure 3 is a block diagram showing a conventional CDMA receiver.
Figure 4 is a block diagram showing details of the received SIR in Figure 3.

### DETAILED DESCRIPTION OF PREFERRED EMBODIMENTS

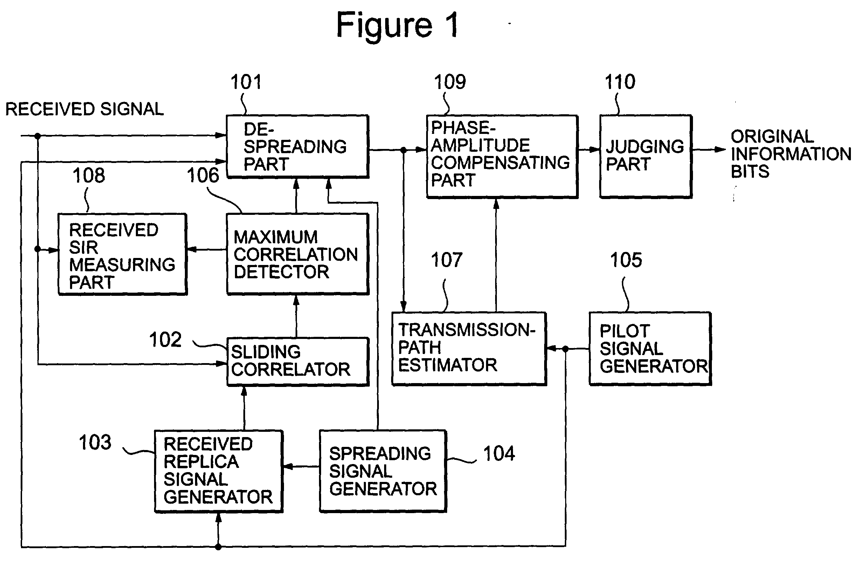

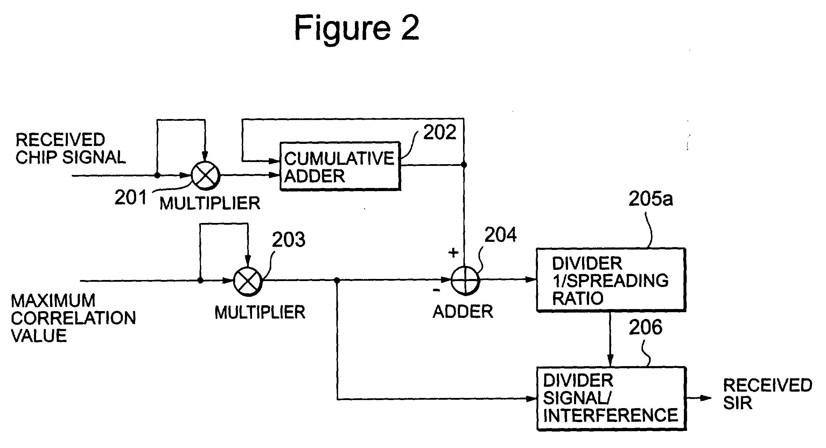

An embodiment of the present invention will be described below with referring to Figures 1 and 2.

Figure 1 is a block diagram showing an embodiment of a CDMA. receiver of the present invention and Figure 2 is a block diagram showing details of the received SIR measuring part 108 in Figure 1.

The CDMA receiver shown in Figure 1 comprises an de-spreading part 101, a sliding correlator 102, a received replica signal generator 103, a spreading signal generator 104, a pilot signal generator 105, a maximum correlation detector 106, a transmission path estimator 107, a received SIR measuring part 108, a phase-amplitude compensating part 109, and a judging part 110.

The spreading signal generator 104 generates a spreading code, and the pilot signal generator 105 generates a pilot symbol replica.

The received replica signal generator 103 applies spreading modulation to a pilot symbol replica generated by the pilot signal generator 105 by using a spreading code generated by the spreading signal generator 104 to generate a replica signal.

The sliding correlator 102 calculates the mutual correlation between the replica signal and the received signal with shifting correlation timing.

The maximum correlation detector 106 detects the maximum correlation value in accordance with the mutual correlation between a replica signal calculated by the sliding correlator 102 and the received signal.

The de-spreading part 101 de-spreads (or demodulates) a received signal in accordance with the reception timing output from the maximum correlation detector 106 to regenerate a received symbol signal.

The transmission path estimator 107 multiplies a signal in the pilot symbol section of a received signal and a pilot symbol replica by a conjugate complex symbol.

The received SIR measuring part 108 serves as reception quality measuring means, which measures a received SIR as the criterion of reception quality. The received SIR is the ratio of signal power component to interference power component.

The phase-amplitude compensating part 109 serves as transmission-path-distortion compensation means, which compensates the transmission path distortion of a received symbol signal output from the de-spreading part 101.

The judging part 110 serving as quadrant decision means applies symbol quadrant decision to a signal whose transmission distortion has been compensated and restores the signal to original information bits.

The received SIR measuring part 108 (in Figure 1) comprises a multiplier 201, a cumulative adder 202, a multiplier 203, an adder 204, a divider 205a, and a divider 206 as shown in Figure 2.

The multiplier 201 serves as a first multiplier, which converts a received chip signal under a spreading state to the power-dimensional signal of the whole signal.

The cumulative adder 202 performs integration corresponding to the number of pilot symbols in accordance with outputs of the multiplier 201 and adder 204.

The multiplier 203 serving as a second multiplier converts the maximum correlation value to a power-dimensional signal and treats it as a signal power component RSSI.

The adder 204 subtracts a signal power component RSSI from the whole power signal to calculate the interference power.

The divider 205a serving as a first divider converts interference power having a spreading spectrum bandwidth to interference power component ISSI having a signal spectrum bandwidth by performing division by a predetermined spreading rate.

The divider 206 serving as a second divider performs subtraction between the output of the multiplier 203 and the output of the divider 205a to output a received SIR.

Then, operations of a CDMA receiver having the above configuration are described below.

First, a received signal input to the CDMA receiver has already-known pilot symbols of a plurality of symbols. An information signal is time-multiplexed to each pilot symbol and serves as a signal spread by a predetermined spreading code.

Because the CDMA receiver detects the pilot symbol section as the time-base criterion of a received signal, a replica signal same as the section is first generated at the CDMA receiver side.

The replica signal is generated by applying spreading modulation to a pilot symbol replica generated by the pilot signal generator 105 through the received replica generator 103 in accordance with a spreading code generated by the spreading signal generator 104.

A replica signal generated by the generator 103 is used for calculating the correlation value between the replica signal and the received signal by the sliding correlator 102 while shifting the correlation timing with the received signal.

The maximum correlation value obtained as the result of calculating the mutual correlation is detected by the maximum correlation detector 106. Then, the time lag between a received signal for providing the maximum correlation value and a replica signal is input to the de-spreading part 101 as reception timing.

The de-spreading part 101 de-spreads (or demodulates) a received signal in accordance with the reception timing output from the maximum correlation detector 106 to obtain a received symbol signal. The transmission path distortion of the received symbol signal obtained by the de-spreading part 101 is compensated by the phase-amplitude compensating part 109 and then, symbol quadrant decision is applied to the signal by the judging part 110, and the signal is restored to original information bits.

In this case, in the transmission path estimator 107, a signal in the pilot symbol section of a received signal and a pilot symbol replica are multiplied by a conjugate complex symbol. Then, a distortion value (=received signal/pilot symbol replica) is calculated, the received signal is multiplied by the conjugate complex signal in the phase-amplitude compensating part 109, and thereby the distortion of a transmission path is compensated.

In this case, two types of signals are input to the received SIR measuring part 108 shown in Figure 2.

One is a received chip signal under a spreading state. The received chip signal includes a signal component having a spreading spectrum bandwidth and serves as the whole signal in which the signal component of a desired signal (or an original information signal to be transmitted), an interference component from another user, and a noise component are combined. The received chip signal is converted to the power-dimensional signal of the whole signal by the multiplier 201 and then, integrated up to the number of pilot symbols by the cumulative adder 202. This is the whole power of received signals in the pilot symbol section.

Another is a maximum correlation value input from the maximum correlation value detection circuit 106.

The maximum correlation value is a value showing the maximum correlation of a received replica signal obtained by multiplying a replica signal by a spreading code. The received replica signal shows the magnitude of a signal component extracted from a received signal. The maximum correlation value is converted to a power-dimensional signal by the multiplier 203 and used as a signal power component RSSI. Then, the signal power component RSSI is subtracted from the whole power signal by the adder 204 and the electric energy of remaining interference obtained by subtracting the signal power component RSSI from the whole power component is obtained. Moreover, interference power having a spreading spectrum bandwidth is converted to an interference power component ISSI having a signal spectrum bandwidth through division by a spreading rate by the divider 205a.

Then, the ratio between the signal power component RSSI and the interference power component ISSI is calculated by the divider 206 and output as a received SIR.

Thus, in the case of this embodiment, the de-spreading part 101 de-spreads a received signal into a received symbol signal in accordance with the reception timing output from the maximum correlation detector 106 and simultaneously, the received SIR measuring part 108 measures the reception quality of the received signal based on the maximum correlation value obtained by the maximum correlation detector 106. Therefore, it is possible to decrease the control delay of the closed-loop power control.

Moreover, because the maximum correlation value obtained by the maximum correlation detector 106 is used to measure the reception quality of a received signal, it is unnecessary to use a circuit for generating a new signal for this measurement.

As described above, according to a CDMA receiver of the present invention, the de-spreading part performs de-spreading a received signal into a received symbol signal in accordance with the reception timing output from the maximum correlation detector and simultaneously, the reception quality measurement part measures the reception quality of the received signal based on the maximum correlation value obtained by the maximum correlation detector. Therefore, it is possible to decrease the control delay of the closed-loop power control.

## Claims

1. A CDMA receiver provided with a maximum correlation detector, which detects a maximum correlation value among mutual correlations between a received replica signal and a received signal, calculates a time lag between the received replica signal and the received signal having the the maximum correlation value, said receiver comprising:
a de-spreading part, which performs de-spreading the received signal by using the reception timing calculated by the maximum correlation detector; and
a reception quality measurement part, which measures a reception quality of the received signal from a received signal, which is input at the same time as the received signal input to the de-spreading part, and the maximum correlation value obtained by the maximum correlation detector.

2. The CDMA receiver according to claim 1, wherein said reception quality measurement part measures a received signal to interference signal ratio (SIR) as the reception quality of the received signal.

3. The CDMA receiver according to claim 2, wherein said reception quality measurement part comprising:
a first calculation part, which calculates a total power-dimensional signal of the received signal;
a second calculation part, which calculates a signal power component of a received signal strength intensity (RSSI) by using the maximum correlation value obtained by the maximum correlation detector; and
a third calculation part, which calculates a power component of an interference signal strength intensity (ISSI) by subtracting the total power-dimensional signal of the received signal by the signal power component of a received signal strength intensity (RSSI), and calculates the received signal to interference signal ratio (SIR) by dividing the RSSI by the ISSI.

4. The CDMA receiver according to claim 2, wherein said reception quality measurement part comprising:
a first multiplier, which converts a received signal under a spreading state to a power-dimensional signal of the whole signal as the whole power component;
a second multiplier, which converts the maximum correlation value detected by the maximum correlation detector to a power-dimensional signal of an information signal as a signal power component;
a cumulative adder, which performs an integral calculation for the whole power component by cumulative addition up to the number of pilot symbols;
an adder, which calculates an interference power component by adding the whole power component and the signal power component;
a first divider, which divides the interference power component by a predetermined spreading rate for converting the interference power having a spreading spectrum bandwidth to an interference power component having a signal bandwidth; and
a second divider, which calculates the signal to interference ratio between the signal power component and the interference power component obtained by the first divider.

5. A CDMA receiver used for a code division multiple access system comprising:
a maximum correlation detector, which detects a maximum correlation value among mutual correlations between a received replica signal and a received signal, calculates a time lag between the received replica signal and the received signal having the the maximum correlation value, and outputting the time lag as a reception timing;
a de-spreading part, which performs de-spreading the received signal by using the reception timing output from the maximum correlation detector and outputting the de-spread signal as a received symbol signal;
a transmission-path-distortion compensating part, which compensates a transmission distortion contained in the received symbol signal output from the de-spreading part by a predetermined value of transmission-path-distortion;
a judging part, which performs symbol quadrant decision to the received symbol signal having been compensated for restoring original information bits; and
a reception quality measurement part, which measures a reception quality of the received signal from the received signal and the maximum correlation value obtained by the maximum correlation detector.

6. The CDMA receiver according to claim 5, wherein said reception quality measurement part measures a received signal to interference signal ratio (SIR) as the reception quality of the received signal.

7. The CDMA receiver according to claim 6, wherein said reception quality measurement part comprising:
a first calculation part, which calculates a total power-dimensional signal of the received signal;
a second calculation part, which calculates a signal power component of a received signal strength intensity (RSSI) by using the maximum correlation value obtained by the maximum correlation detector; and
a third calculation part, which calculates a power component of an interference signal strength intensity (ISSI) by subtracting the total power-dimensional signal of the received signal by the signal power component of a received signal strength intensity (RSSI), and calculates the received signal to interference signal ratio (SIR) by dividing the RSSI by the ISSI.

8. The CDMA receiver according to claim 6, wherein said reception quality measurement part comprising:
a first multiplier, which converts a received signal under a spreading state to a power-dimensional signal of the whole signal as the whole power component;
a second multiplier, which converts the maximum correlation value detected by the maximum correlation detector to a power-dimensional signal of an information signal as a signal power component;
a cumulative adder, which performs an integral calculation for the whole power component by cumulative addition up to the number of pilot symbols;
an adder, which calculates an interference power component by adding the whole power component and the signal power component;
a first divider, which divides the interference power component by a predetermined spreading rate for converting the interference power having a spreading spectrum bandwidth to an interference power component having a signal bandwidth; and
a second divider, which calculates the signal to interference ratio between the signal power component and the interference power component obtained by the first divider.
